# FASCICULE DE BREVET EUROPEEN

(11) **EP 4 182 175 B1**
(45) Date de publication et mention de la délivrance du brevet: **02.04.2025**
(21) Numéro de dépôt: 21748922.8
(22) Date de dépôt: 05.07.2021
(51) Int. Cl.: B60C 9/20, B60C 11/03, B60C 5/00, B60C 11/12

(54) **PNEUMATIQUE POUR VEHICULE AGRICOLE COMPRENANT UNE BANDE DE ROULEMENT AMELIOREE**
REIFEN FÜR EIN LANDWIRTSCHAFTLICHES FAHRZEUG MIT VERBESSERTER LAUFFLÄCHE
TYRE FOR AN AGRICULTURAL VEHICLE COMPRISING AN IMPROVED TREAD

(30) Priorité: 16.07.2020 FR 2007455
(43) Date de publication de la demande: 24.05.2023
(73) Titulaire: COMPAGNIE GENERALE DES ETABLISSEMENTS MICHELIN, 63000 Clermont-Ferrand (FR)
(72) Inventeur: PERRIN, Frédéric, 63040 CLERMONT-FERRAND Cedex 9 (FR); DEAN, David, 63040 CLERMONT-FERRAND Cedex 9 (FR); VACHERAND, Jean-Michel, 63040 63040 CLERMONT-FERRAND Cedex 9 (FR); PRAS, Maxime, 63040 CLERMONT-FERRAND Cedex 9 (FR)
(74) Mandataire: M.F.P. Michelin
(86) Numéro de dépôt international: PCT/FR2021/051222
(87) Numéro de publication internationale: WO 2022/013489

(56) Documents cités:
- EP-A1- 2 752 311
- EP-A1- 3 444 128
- FR-A1- 3 044 968
- JP-A- H05 229 312
- US-A- 4 176 703
- US-A1- 2010 032 067

## Description

La présente invention a pour objet un pneumatique pour véhicule agricole, tel qu'un tracteur agricole ou un véhicule agro-industriel, et concerne plus particulièrement sa bande de roulement, FR 3 044 968 A1 décrit un pneumatique pour véhicule agricole comportant une bande de roulement avec des éléments de sculpture sous forme de barrettes.

Les spécifications dimensionnelles (largeur de section, diamètre hors tout, diamètre et largeur de jante de montage) et les conditions d'usage (charge, vitesse, pression) d'un pneumatique pour véhicule agricole sont définies dans des normes, telles que, par exemple, la norme « ETRTO » ou « European Tyre and Rim Technical Organisation » (Organisation Technique Européenne du Pneu et de la Jante) dans son « Standards Manual-2018 » (Manuel de normes 2018), dans la section consacrée aux « Agricultural equipment tyres » (Pneumatiques pour équipements agricoles). A titre d'exemple, un pneumatique radial pour roue motrice d'un tracteur agricole est destiné à être monté sur une jante dont le diamètre est généralement compris entre 16 pouces et 46 pouces, voire 54 pouces. Il est destiné à rouler sur un tracteur agricole dont la puissance est comprise entre 50 CV et plus de 250 CV (jusqu'à 550 CV) et pouvant rouler jusqu'à 65 km/h. Pour ce type de pneumatique, la pression de gonflage minimale recommandée correspondant à la capacité de charge indiquée est le plus souvent au plus égale à 400 kPa, mais peut descendre jusqu'à 240 kPa, pour un pneumatique « IF » ou « Improved Flexion » (flexion améliorée), voire 160 kPa, pour un pneumatique « VF » ou « Very High Flexion » (très grande flexion).

Comme tout pneumatique, un pneumatique pour véhicule agricole comprend une bande de roulement, destinée à venir en contact avec un sol par l'intermédiaire d'une surface de roulement - surface de contact sur un sol rigide - et dont les deux extrémités axiales sont reliées par l'intermédiaire de deux flancs à deux bourrelets assurant la liaison mécanique entre le pneumatique et la jante sur laquelle il est destiné à être monté.

Dans ce qui suit, les directions circonférentielle (ou longitudinale), axiale (ou transversale) et radiale désignent respectivement une direction tangente à la surface de roulement et orientée selon le sens de rotation du pneumatique, une direction parallèle à l'axe de rotation du pneumatique et une direction perpendiculaire à l'axe de rotation du pneumatique. Un plan radial (ou méridien) est défini par une direction radiale et la direction axiale, et contient l'axe de rotation du pneumatique. Un plan circonférentiel est défini par une direction radiale et une direction circonférentielle, et est donc perpendiculaire à l'axe de rotation du pneumatique. Le plan circonférentiel passant par le milieu de la bande de roulement est appelé plan équatorial.

La bande de roulement d'un pneumatique pour véhicule agricole comprend généralement une pluralité d'éléments en relief, appelés éléments de sculpture, s'étendant radialement vers l'extérieur à partir d'une surface portante jusqu'à la surface de roulement, et séparés les uns des autres par des creux.

La proportion de creux est de façon usuelle quantifiée par un taux d'entaillement volumique global TEV, défini comme le ratio entre le volume VC de creux et le volume total V de la bande de roulement supposée sans creux correspondant au volume géométrique délimité par la surface portante et la surface de roulement. La surface de roulement variant avec l'usure de la bande de roulement, le taux d'entaillement volumique global TEV est généralement, mais pas obligatoirement, variable avec le niveau d'usure. Ainsi, le taux d'entaillement volumique global TEV peut être défini pour un état neuf ou pour un état d'usure donné. A titre d'exemple, un pneumatique pour roue motrice de tracteur agricole à l'état neuf a un taux d'entaillement volumique global TEV généralement au moins égal à 50% et souvent au moins égal à 60%. Dans ce qui suit, l'expression « taux d'entaillement volumique global TEV » signifie implicitement « taux d'entaillement volumique global TEV à l'état neuf ».

On peut également définir un taux d'entaillement volumique local TEVL pour toute portion de bande de roulement, s'étendant circonférentiellement sur toute la circonférence du pneumatique et s'étendant axialement à partir d'un premier plan circonférentiel jusqu'à un deuxième plan circonférentiel, la distance entre ces deux plans circonférentiels représentant la largeur axiale, appelée plus simplement largeur, de la portion de bande de roulement. Le taux d'entaillement volumique local TEVL est défini comme le ratio entre le volume de creux VCL et le volume total VL de la portion de bande de roulement supposée sans creux, correspondant au volume géométrique délimité par la surface portante, la surface de roulement et les deux plans circonférentiels. Comme le taux d'entaillement volumique global TEV, le taux d'entaillement volumique local TEVL peut être défini pour un état neuf ou pour un état d'usure donné. Dans ce qui suit, l'expression « taux d'entaillement volumique local TEVL » signifie implicitement « taux d'entaillement volumique local TEVL à l'état neuf ».

Chaque élément de sculpture peut être caractérisé géométriquement par une hauteur radiale H selon une direction radiale, une largeur axiale A selon une direction axiale et une longueur circonférentielle B selon une direction circonférentielle. Ces trois dimensions H, A et B sont des valeurs moyennes, sachant qu'elles peuvent varier selon les points de mesure sélectionnés sur l'élément de sculpture. Concernant la largeur axiale A et la longueur circonférentielle B, elles peuvent augmenter à partir de la surface de roulement jusqu'à la surface portante, en fond de creux, du fait de la présence de dépouilles. Concernant la hauteur radiale H, pour un pneumatique radial pour roue motrice d'un tracteur agricole, la hauteur radiale H d'un élément de sculpture est généralement au moins égale à 50 mm et le plus généralement au moins égale à 60 mm. A partir de ces trois dimensions H, A et B, peuvent être définis, pour un élément de sculpture donné, un élancement circonférentiel H/B, un élancement axial H/A et un rapport de forme surfacique B/A.

Une bande de roulement pour véhicule agricole comprend usuellement des éléments de sculpture ayant la forme de barrettes. Une barrette a généralement une forme allongée globalement parallélépipédique, continue ou discontinue, et constituée d'au moins une portion rectiligne ou curviligne. Une barrette est séparée des barrettes adjacentes par des creux ou sillons. Une barrette s'étend axialement à partir d'une zone médiane de la bande de roulement jusqu'à ses extrémités axiales ou épaules. Une barrette comprend une face de contact, positionnée dans la surface de roulement et destinée à entrer totalement en contact avec le sol, une face d'attaque, coupant la surface de roulement et dont l'arête d'intersection avec celle-ci est destinée à entrer en contact en premier avec le sol, une face de fuite, coupant la surface de roulement et dont l'arête d'intersection avec celle-ci est destinée à entrer en contact en dernier avec le sol, et deux faces latérales.

Les barrettes sont réparties circonférentiellement avec un pas constant ou variable et sont généralement disposées de part et d'autre du plan équatorial du pneumatique, de manière à former un motif en V, la pointe du motif en V (ou encore motif en chevron) étant destinée à entrer la première dans l'aire de contact avec le sol. Les barrettes présentent généralement une symétrie par rapport au plan équatorial du pneumatique, avec le plus souvent un décalage circonférentiel entre les deux rangées de barrettes, obtenu par une rotation autour de l'axe du pneumatique d'une moitié de la bande de roulement par rapport à l'autre moitié de la bande de roulement.

Un pneumatique radial pour véhicule agricole comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule agricole comprend au moins une couche de carcasse reliant les deux bourrelets entre eux. Les renforts d'une couche de carcasse sont sensiblement parallèles entre eux et forment, avec la direction circonférentielle, un angle compris entre 75° et 105°, de préférence entre 85° et 95°. Une couche de carcasse comprend des renforts le plus souvent textiles, enrobés par un matériau polymérique de type élastomère ou élastomérique appelé mélange d'enrobage.

L'armature de sommet d'un pneumatique radial pour véhicule agricole comprend une superposition de couches de sommet s'étendant circonférentiellement, radialement à l'extérieur de l'armature de carcasse. Chaque couche de sommet est constituée de renforts enrobés par un mélange élastomérique et parallèles entre eux. Lorsque les renforts de couche de sommet forment, avec la direction circonférentielle, un angle inférieur à 10°, ils sont dits circonférentiels, ou sensiblement circonférentiels, et assurent une fonction de frettage limitant les déformations radiales du pneumatique. Lorsque les renforts de couche de sommet forment, avec la direction circonférentielle, un angle au moins égal à 10° et le plus souvent au plus égal à 30°, ils sont appelés renforts à angle et ont une fonction de reprise des efforts transversaux, parallèles à la direction axiale, appliqués au pneumatique. Les renforts de couche de sommet peuvent être constitués par des matériaux polymériques de type textiles, tels qu'un polyester, par exemple un polyéthylène téréphtalate (PET), un polyamide aliphatique, par exemple un nylon, un polyamide aromatique, par exemple l'aramide, ou encore la rayonne, ou par des matériaux métalliques, tels que l'acier.

Un pneumatique pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour véhicule agricole doit présenter un compromis de performances entre, de façon non exhaustive, la traction en champ sur sol meuble, la résistance aux arrachements, la résistance à l'usure sur route, la résistance à l'avancement, le confort vibratoire sur route.

Un problème essentiel pour l'utilisation d'un pneumatique en champ est de limiter au maximum la compaction du sol par le pneumatique, susceptible de nuire aux cultures.

C'est la raison pour laquelle, dans le domaine agricole, des pneumatiques à basse pression, donc à forte flexion, ont été développés. La norme ETRTO distingue ainsi les pneumatiques IF (Improved Flexion), avec une pression de gonflage minimale recommandée généralement égale à 240 kPa, et les pneumatiques VF (Very high Flexion), avec une pression de gonflage minimale recommandée généralement égale à 160 kPa. Selon la norme, par rapport à un pneumatique standard, un pneumatique IF a une capacité de charge augmentée de 20%, et un pneumatique VF a une capacité de charge augmentée de 40%, pour une pression de gonflage égale à 160 kPa.

Toutefois l'utilisation de pneumatiques à basse pression a un impact négatif sur le comportement en champ. Ainsi la baisse de la pression de gonflage a entrainé une diminution des rigidités transversale et de dérive du pneumatique, d'où une diminution de la poussée transversale du pneumatique, et, par conséquent, une dégradation de son comportement sous sollicitations transversales.

Une solution pour rétablir une poussée transversale correcte a été de rigidifier transversalement l'armature de sommet du pneumatique, en remplaçant les couches de sommet à renforts textiles par des couches de sommet à renforts métalliques. Ainsi, par exemple, une armature de sommet comprenant 6 couches de sommet à renforts textiles en rayonne a été remplacée par une armature de sommet comprenant 2 couches de sommet à renforts en acier. Le document EP 2934917 décrit ainsi un pneumatique IF comprenant une armature de sommet comprenant au moins deux couches de sommet à renforts métalliques, combinée avec une armature de carcasse comprenant au moins deux couches de carcasse à renforts textiles.

Les inventeurs se sont alors donnés pour objectif d'augmenter la capacité de traction en champ sur sol meuble d'un pneumatique pour véhicule agricole en général, et, en particulier, pour celle d'un pneumatique pour véhicule agricole, comprenant une armature de sommet avec des renforts métalliques et/ou fonctionnant à basse pression tel qu'un pneumatique IF (Improved Flexion) ou un pneumatique VF (Very High Flexion).

Cet objectif est atteint, selon l'invention, par un pneumatique pour véhicule agricole ayant une largeur de section nominale L et comprenant, radialement de l'extérieur vers l'intérieur, une bande de roulement et une armature de sommet :
- la bande de roulement comprenant des éléments de sculpture, séparés les uns des autres par des creux et s'étendant radialement vers l'extérieur à partir d'une surface portante jusqu'à une surface de roulement ,
- la bande de roulement ayant un taux d'entaillement volumique global TEV, défini comme le rapport entre le volume VC de creux et le volume total V de la bande de roulement supposée sans creux, compris entre la surface portante et la surface de roulement,
- chaque élément de sculpture ayant un élancement circonférentiel H/B au plus égal à 1.5, H étant une hauteur radiale moyenne entre la surface portante et la surface de roulement au moins égale à 20 mm, et B étant une longueur circonférentielle moyenne,
- la bande de roulement comprenant une portion centrale, centrée sur un plan équatorial du pneumatique et ayant une largeur axiale L1 au moins égale à 0.15*L et au plus égale à 0.35*L, et deux portions intermédiaires, chacune prolongeant axialement vers l'extérieur la portion centrale jusqu'à une distance axiale D2 égale à 0.3*L, mesurée à partir du plan équatorial,
- la portion centrale et chaque portion intermédiaire comprenant des éléments de sculpture répartis circonférentiellement, deux à deux séparés par des creux transversaux formant, avec une direction circonférentielle du pneumatique, un angle au moins égal à 30°,
- l'armature de sommet comprenant au moins deux couches de sommet, comprenant chacune des renforts enrobés dans un matériau élastomérique, parallèles entre eux, croisés d'une couche à la suivante, et formant, avec la direction circonférentielle, un angle au moins égal à 10°,
- la portion centrale ayant un taux d'entaillement volumique local TEVL1, défini comme le rapport entre le volume VC1 des creux transversaux et le volume total V1 de ladite portion centrale, compris entre la surface portante et la surface de roulement, au plus égal à 15%.

La bande de roulement, selon une première caractéristique de l'invention, comprend des éléments de sculpture ayant un élancement circonférentiel H/B au plus égal à 1.5, H étant une hauteur radiale moyenne entre la surface portante et la surface de roulement au moins égale à 20 mm, et B étant une longueur circonférentielle moyenne. Pour un élément de sculpture donné, la hauteur radiale entre la surface portante et la surface de roulement est sensiblement constante, donc la hauteur radiale moyenne H est égale à cette hauteur radiale sensiblement constante. En revanche, la longueur circonférentielle d'un élément de sculpture peut varier sensiblement selon la profondeur à laquelle elle est mesurée, en raison de l'inclinaison des faces avant (ou d'attaque) et arrière (ou de fuite) de l'élément de sculpture, selon le sens de roulage : d'où la nécessité de définir une longueur circonférentielle moyenne B. L'élancement circonférentiel H/B, qui caractérise géométriquement la rigidité circonférentielle de l'élément de sculpture, n'est pas nécessairement constant et peut varier entre deux éléments de sculpture.

La bande de roulement comprend en outre, selon une deuxième caractéristique de l'invention, une portion centrale, centrée sur un plan équatorial du pneumatique et ayant une largeur axiale L1 au moins égale à 0.15*L et au plus égale à 0.35*L, et deux portions intermédiaires, chacune prolongeant axialement vers l'extérieur la portion centrale jusqu'à une distance axiale D2 égale à 0.3*L, mesurée à partir du plan équatorial. La section nominale L de pneumatique est la « design section width » définie dans la norme ETRTO.

De plus, selon une troisième caractéristique de l'invention, la portion centrale et chaque portion intermédiaire comprennent des éléments de sculpture répartis circonférentiellement, deux à deux séparés par des creux transversaux formant, avec une direction circonférentielle du pneumatique, un angle au moins égal à 30°. Ces creux sont qualifiés de transversaux, dans la mesure où leur direction forme un angle avec la direction circonférentielle suffisamment grand, et ne peuvent donc être qualifiés de circonférentiels ou longitudinaux. En d'autres termes, leur direction varie entre une position oblique et une position transversale, parallèle à l'axe de rotation du pneumatique. Par définition, l'angle formé par les creux est l'angle formé par leur surface moyenne, généralement constituée par un plan perpendiculaire à la surface de roulement. Dans le cas où cette surface moyenne est constituée par une succession de plans, chacun de ces plans forme un angle au moins égal à 30°.

Selon une quatrième caractéristique de l'invention, l'armature de sommet comprend au moins deux couches de sommet, comprenant chacune des renforts enrobés dans un matériau élastomérique, parallèles entre eux, croisés d'une couche à la suivante, et formant, avec la direction circonférentielle, un angle au moins égal à 10°.

Selon une cinquième et dernière caractéristique de l'invention, la portion centrale a un taux d'entaillement volumique local TEVL1 au plus égal à 15%, c'est-à-dire un faible taux d'entaillement volumique traduisant la présence d'un petit volume de creux.

La combinaison de ces caractéristiques garantit en particulier, pour la portion centrale de la bande de roulement, une forte rigidité circonférentielle, du fait de son faible taux d'entaillement volumique et d'un élancement circonférentiel limité pour les éléments de sculpture, ainsi qu'une mise à plat circonférentielle facilitée, lors du passage dans l'aire de contact, en raison de la présence de creux transversaux qui jouent un rôle de charnières : d'où une augmentation de la capacité de traction. En effet une portion centrale découpée, constituée de blocs séparés par des creux transversaux, a une meilleure mise à plat circonférentielle qu'une portion centrale continue, constituée d'au moins une nervure continue sans creux transversaux.

Avantageusement les creux transversaux de la portion centrale de bande de roulement forment avec la direction circonférentielle du pneumatique un angle au moins égal à 60°. Un angle au moins égal à 60° est caractéristique d'un creux sensiblement transversal, qui joue un rôle de charnière sensiblement transversale facilitant encore davantage la mise à plat circonférentielle de la bande de roulement, au niveau de sa portion centrale.

Préférentiellement les creux transversaux de la portion centrale de bande de roulement sont des incisions transversales, aptes à se fermer lors de leur passage dans l'aire de contact avec un sol au cours du roulage du pneumatique. Les incisions transversales sont des creux transversaux ayant une très faible largeur, puisque aptes à se fermer lors de leur passage dans l'aire de contact. Plus précisément, en entrée et sortie de l'aire de contact, ces incisions sont ouvertes et facilitent la mise à plat circonférentielle de la bande de roulement dans ces zones. Dans l'aire de contact, ces incisions se referment et créent une nervure continue ayant une rigidité circonférentielle plus forte que celle obtenue avec des creux transversaux qui restent ouverts. L'aptitude à la fermeture des incisions transversales lors de leur passage dans l'aire de contact est définie sur un pneumatique soumis à des conditions de pression et de charge telles que définies par la norme ETRTO.

Avantageusement les creux transversaux de chaque portion intermédiaire forment, avec la direction circonférentielle, un angle au moins égal à 60°. Un angle au moins égal à 60° est caractéristique d'un creux sensiblement transversal, qui joue un rôle de charnière sensiblement transversale facilitant encore davantage la mise à plat circonférentielle de la bande de roulement, au niveau de ses portions intermédiaires.

Selon un mode de réalisation préféré, chaque élément de sculpture de la portion centrale ayant une hauteur radiale moyenne H1, une longueur circonférentielle moyenne B1, et un élancement circonférentiel H1/B1, et chaque élément de sculpture de chaque portion intermédiaire ayant une hauteur radiale moyenne H2, une longueur circonférentielle moyenne B2, et un élancement circonférentiel H2/B2, l'élancement circonférentiel H1/B1 est strictement supérieur à l'élancement circonférentiel H2/B2. Dans ce mode de réalisation, il y donc un différentiel d'élancement circonférentiel entre les éléments de sculpture de la portion centrale et ceux de chaque portion intermédiaire. Un élancement circonférentiel H1/B1 d'élément de sculpture dans la portion centrale, strictement supérieur à l'élancement circonférentiel H2/B2 d'élément de sculpture, implique que la rigidité circonférentielle d'un élément de sculpture de la portion centrale est inférieure à celle d'un élément de sculpture des portions intermédiaires. Une rigidité circonférentielle relativement élevée des éléments de sculpture de portion intermédiaire garantit avantageusement une capacité de traction du pneumatique lors de son roulage en champ sur un sol relativement cohésif par exemple un chaume de blé sec. Il est à noter que l'élancement circonférentiel conditionnant cette rigidité circonférentielle résulte d'un compromis entre la capacité de traction en champ sur sol sec, la capacité de traction en champ sur un sol gorgé d'eau obtenue par un taux d'entaillement volumique adapté de chaque portion intermédiaire, et la durée de vie de la bande de roulement obtenue par une hauteur radiale moyenne H2 d'élément de sculpture de portion intermédiaire suffisante.

Selon une variante préférée du mode de réalisation préféré précédemment décrit, l'élancement circonférentiel H2/B2 de chaque élément de sculpture (222) de chaque portion intermédiaire (212) est au plus égal à 0.6. Cette condition signifie que la rigidité circonférentielle d'un élément de sculpture de portion intermédiaire nécessaire à une capacité de traction suffisante du pneumatique lors de son roulage en champ sur un sol relativement cohésif est obtenue pour un élément de sculpture plutôt allongé selon la direction circonférentielle, avec une hauteur radiale moyenne H2 au plus égale à 60% de la longueur circonférentielle moyenne B2.

Encore préférentiellement une portion médiane de bande de roulement, centrée sur le plan équatorial du pneumatique et ayant une largeur axiale L2 égale à 2*D2=0.40*L, a un taux d' entaillement volumique local TEVL2, défini comme le rapport entre le volume VC2 des creux et le volume total V2 de ladite portion médiane de bande de roulement, compris entre la surface portante et la surface de roulement, au plus égal à 45%. En d'autres termes, le taux d'entaillement volumique TEVL2, déterminé sur une portion médiane ayant une largeur L2 égale à 40% de la largeur de section nominale L du pneumatique, et constituée par la portion centrale et les deux portions intermédiaires précédemment décrites, est supérieur au taux d'entaillement volumique TEVL1 de la portion centrale, sans toutefois dépasser 45%. Par conséquent, le volume de creux augmente lorsque qu'on s'éloigne du plan équatorial du pneumatique, ce qui permet en particulier de garantir une motricité satisfaisante sur des sols humides à faible cohésion.

Selon une première variante de réalisation, la bande de roulement comprend exclusivement des creux transversaux. Par conséquent, la bande de roulement ne comprend aucun creux circonférentiel.

Selon une deuxième variante de réalisation, la portion centrale de bande de roulement est axialement délimitée, de part et d'autre, par des creux circonférentiels. Par creux circonférentiel, on entend un creux soit strictement circonférentiel, soit oblique avec un angle d'inclinaison par rapport à la direction circonférentielle au plus égal à 45°.

Avantageusement chaque élément de sculpture a une hauteur radiale moyenne H au plus égale à 55 mm. Au-delà de cette valeur, l'élancement circonférentiel H/B d'un élément de sculpture risque d'être supérieur à 0.8. En conséquence les rigidités de basculement en flexion et de cisaillement, selon la direction circonférentielle, de chaque élément de sculpture deviennent trop faibles pour garantir, en particulier dans la portion centrale de la bande de roulement, une rigidité circonférentielle globale suffisante pour le niveau de motricité recherché. Par ailleurs, une hauteur radiale trop élevée pénalise le niveau thermique du sommet du pneumatique, et donc son endurance.

Encore avantageusement la bande de roulement a un taux d'entaillement volumique global TEV au plus égal à 56%. Au-delà de cette valeur de taux d'entaillement volumique global TEV, le volume de creux devient trop élevé. Corrélativement, le volume de matière devient trop bas pour garantir une durée de vie suffisante vis-à-vis de l'usure.

Dans un mode de réalisation particulier des creux transversaux, au moins une partie des creux transversaux comprend au moins un chanfrein débouchant sur la surface de roulement en formant, avec une direction radiale, un angle D au moins égal à 30° et au plus égal à 70° et ayant une hauteur radiale C au moins égale à 3 mm et au plus égale à 10 mm. Le plus souvent, tous les creux transversaux comprennent au moins un chanfrein. Selon une première variante, tous les creux transversaux comprennent un chanfrein unique. Selon une deuxième variante, tous les creux transversaux comprennent deux chanfreins en vis-à-vis. La présence de chanfreins contribue à une amélioration significative de la motricité de la bande de roulement.

Selon un mode préférentiel de l'armature de sommet du pneumatique, l'armature de sommet comprend des couches de sommet comprenant des renforts métalliques, de préférence au plus deux couches de sommet comprenant des renforts métalliques. La présence de renforts métalliques permet d'obtenir la rigidité de sommet souhaitée, avec un nombre limité de couches de sommet, impliquant une épaisseur de sommet limitée. Il en résulte une rigidité de flexion du sommet plus faible que pour un sommet usuel de l'état de la technique, ce qui facilite la mise à plat du pneumatique. Ainsi la surface de contact avec le sol est augmentée, ce qui, d'une part, diminue les pressions au sol, et donc la compaction du sol, et, d'autre part, augmente la capacité de traction.

Dans un premier domaine préférentiel de pneumatique, le pneumatique pour véhicule agricole est un pneumatique « IF » ou « Improved Flexion » (flexion améliorée) au sens de la norme « ETRTO » ou « European Tyre and Rim Technical Organisation » (Organisation Technique Européenne du Pneu et de la Jante), dans son « Standards Manual-2018 » (Manuel de normes 2018), dans la section consacrée aux « Agricultural equipment tyres » (Pneumatiques pour équipements agricoles), ayant une capacité de charge 20% supérieure à celle d'un pneumatique standard à iso-pression.

Dans un second domaine préférentiel de pneumatique, le pneumatique pour véhicule agricole est un pneumatique « VF » ou « Very High Flexion » (très grande flexion) au sens de la norme « ETRTO » ou « European Tyre and Rim Technical Organisation » (Organisation Technique Européenne du Pneu et de la Jante), dans son « Standards Manual-2018 » (Manuel de normes 2018), dans la section consacrée aux « Agricultural equipment tyres » (Pneumatiques pour équipements agricoles), ayant une capacité de charge 40% supérieure à celle d'un pneumatique standard à iso-pression.

Les caractéristiques de l'invention sont illustrées par les figures 1 à 12 schématiques et non représentées à l'échelle :
- Figure 1 : Vue en perspective d'ensemble d'un pneumatique pour véhicule agricole selon une première variante de réalisation de l'invention.
- Figure 2 : Vue en perspective détaillée de la bande de roulement d'un pneumatique pour véhicule agricole selon la première variante de réalisation de l'invention (détail C1 de la figure 1).
- Figure 3 : Vue de face d'ensemble d'un pneumatique pour véhicule agricole selon la première variante de réalisation de l'invention.
- Figure 4 : Vue de face détaillée de la bande de roulement d'un pneumatique pour véhicule agricole selon la première variante de réalisation de l'invention (détail D1 de la figure 3).
- Figure 5 : Coupe circonférentielle de la bande de roulement d'un pneumatique pour véhicule agricole selon la première variante de réalisation de l'invention (coupe A-A de la figure 3).
- Figure 6 : Demi-coupe méridienne d'un pneumatique pour véhicule agricole selon l'invention (coupe B-B de la figure 3).
- Figure 7 : Vue en perspective d'ensemble d'un pneumatique pour véhicule agricole selon une deuxième variante de réalisation de l'invention.
- Figure 8 : Vue en perspective détaillée de la bande de roulement d'un pneumatique pour véhicule agricole selon la deuxième variante de réalisation de l'invention (détail C2 de la figure 7).
- Figure 9 : Vue de face d'ensemble d'un pneumatique pour véhicule agricole selon une troisième variante de réalisation de l'invention.
- Figure 10 : Vue en perspective détaillée de la bande de roulement d'un pneumatique pour véhicule agricole selon la troisième variante de réalisation de l'invention (détail D3 de la figure 9).
- Figure 11 : Vue en coupe d'un creux transversal comprenant un chanfrein unique.
- Figure 12 : Vue en coupe d'un creux transversal comprenant deux chanfreins en vis-à-vis.

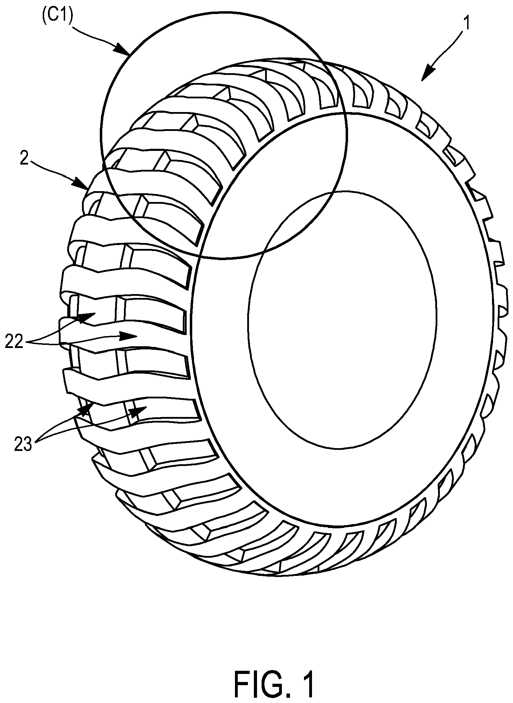

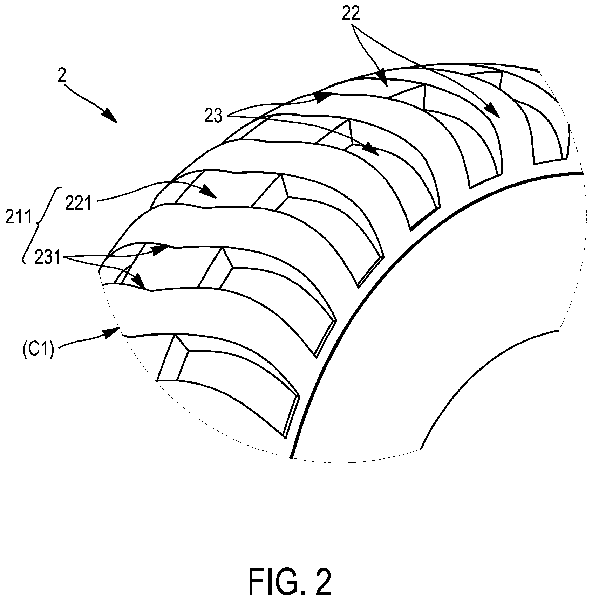

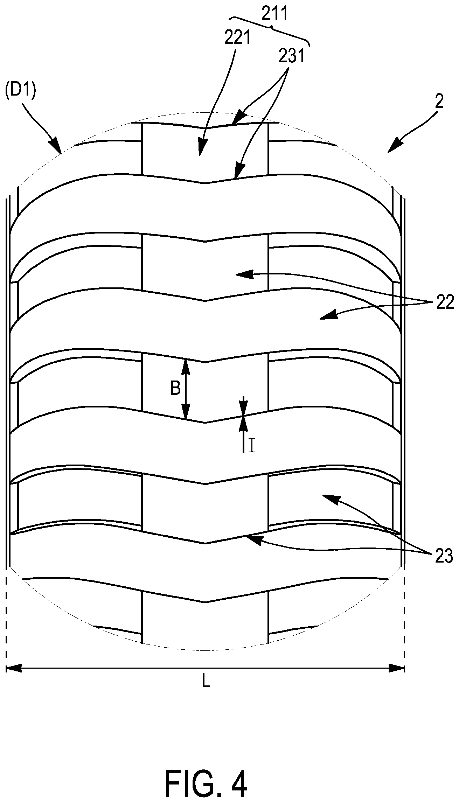

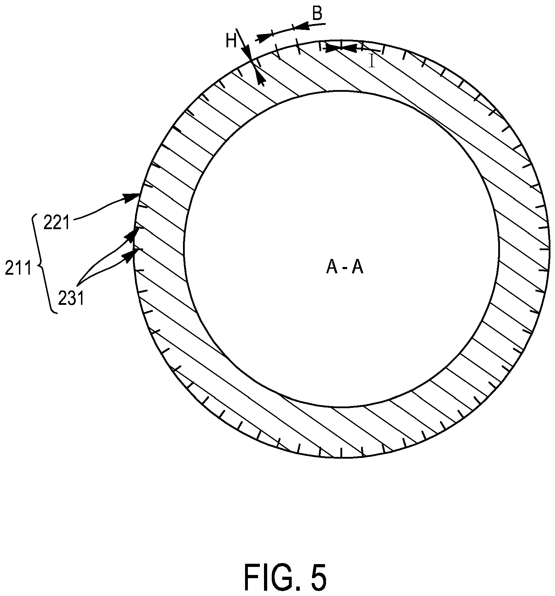

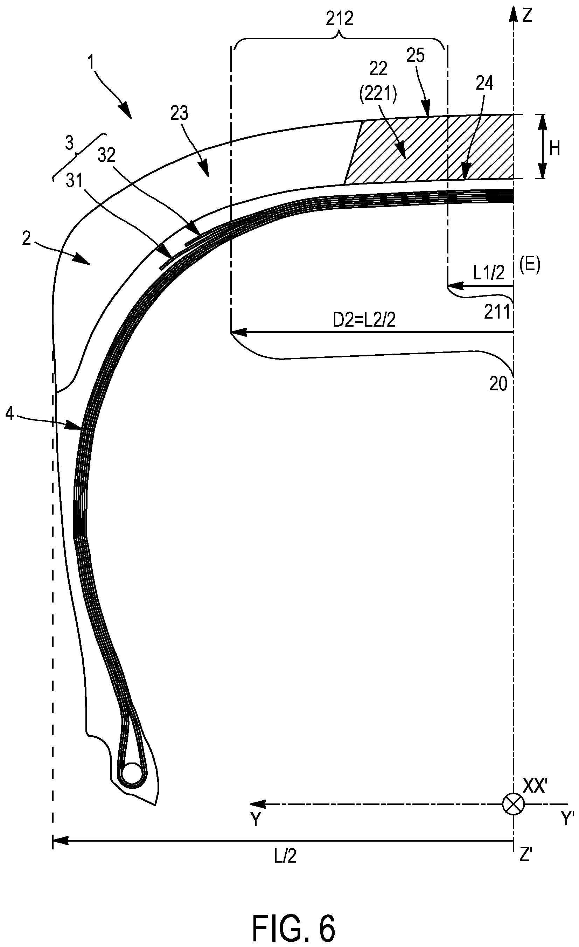

Les figures 1 à 5 illustrent un pneumatique 1 pour véhicule agricole selon une première variante de réalisation de l'invention. La bande de roulement 2 comprend des éléments de sculpture 22, séparés les uns des autres par des creux 23 et s'étendant radialement vers l'extérieur à partir d'une surface portante 24 jusqu'à une surface de roulement 25 (la surface portante et la surface de roulement sont représentées sur la figure 6). Dans cette première variante de réalisation, la bande de roulement 2 comprend exclusivement des creux transversaux 231 (figures 2, 4 et 5). Dans la portion centrale 211 de bande de roulement, les creux transversaux 231 sont des incisions transversales, de largeur I, aptes à se fermer lors de leur passage dans l'aire de contact avec un sol au cours du roulage du pneumatique (figures 4 et 5), lorsque le pneumatique est soumis à des conditions de pression et de charge telles que définies par la norme ETRTO. Les éléments de sculpture 221 de la portion centrale 211 de bande de roulement, séparés par lesdites incisions transversales, ont une hauteur radiale moyenne H et une longueur circonférentielle moyenne B (figure 5), par conséquent un élancement circonférentiel H/B.

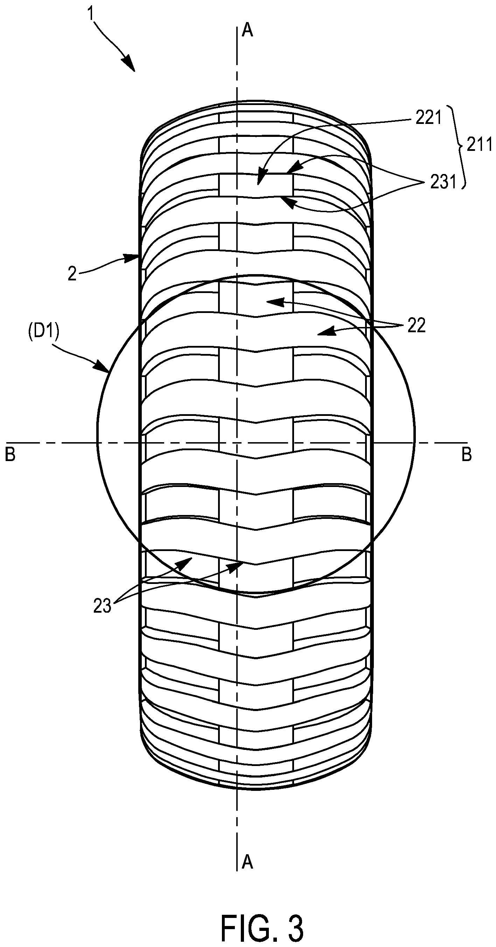

La figure 6 est une demi-coupe méridienne d'un pneumatique pour véhicule agricole selon l'invention. Cette coupe radiale est réalisée selon le plan B-B de la figure 3. Sur cette figure est représenté un pneumatique 1 pour véhicule agricole ayant une demi-largeur de section nominale L/2, et comprenant, radialement de l'extérieur vers l'intérieur, une bande de roulement 2 et une armature de sommet 3. La bande de roulement 2 comprend des éléments de sculpture 22, séparés les uns des autres par des creux 23 et s'étendant radialement vers l'extérieur à partir d'une surface portante 24 jusqu'à une surface de roulement 25. La bande de roulement 2 a un taux d'entaillement volumique global TEV, défini comme le ratio entre le volume VC de creux 23 et le volume total V de la bande de roulement 2 supposée sans creux, compris entre la surface portante 24 et la surface de roulement 25, au moins égal à 35%. Chaque élément de sculpture 22 a un élancement circonférentiel H/B au plus égal à 0.8, H étant la hauteur radiale moyenne entre la surface portante 24 et la surface de roulement 25 au moins égale à 20 mm et B étant la longueur circonférentielle moyenne de l'élément de sculpture 22 (non représentée). L'armature de sommet 3 comprend deux couches de sommet (31, 32), comprenant chacune des renforts préférentiellement métalliques enrobés dans un matériau élastomérique, parallèles entre eux, croisés d'une couche à la suivante, et formant, avec une direction circonférentielle XX' du pneumatique, un angle au moins égal à 10°. Radialement à l'intérieur de l'armature de sommet 3, est positionnée une armature de carcasse 4. Selon l'invention, une portion centrale de bande de roulement 211, centrée sur un plan équatorial E du pneumatique et ayant une largeur axiale L1 au moins égale à 0.15*L et au plus égale à 0.35*L, comprend des éléments de sculpture 221 (identifiés sous la référence générique 22 des éléments de sculpture, sur la figure 6) répartis circonférentiellement , deux à deux séparés par des creux transversaux 231 (non représentés sur la figure 6) formant avec la direction circonférentielle XX' un angle au moins égal à 30°, et la portion centrale de bande de roulement 211 a un taux d'entaillement volumique local TEVL1, défini comme le rapport entre le volume VC1 des creux transversaux 231 et le volume total V1 de ladite portion centrale de bande de roulement 211, compris entre la surface portante 24 et la surface de roulement 25, au plus égal à 15%. Sur la figure 6 est représentée une demi-portion centrale de bande de roulement de largeur L1/2. La bande de roulement 2 comprend en outre deux portions intermédiaires 212, chacune prolongeant axialement vers l'extérieur la portion centrale 211 jusqu'à une distance axiale D2 égale à 0.3*L, mesurée à partir du plan équatorial E. Sur la figure 6 est représentée une seule portion intermédiaire 212 de bande de roulement de largeur D2-L1/2. Préférentiellement une portion médiane de bande de roulement 20, centrée sur le plan équatorial du pneumatique et ayant une largeur axiale L2 égale à 2*D2=0.60*L, constituée par l'ensemble de la portion centrale 211 et des deux portions intermédiaires 212, a un taux d'entaillement volumique local TEVL2, défini comme le rapport entre le volume VC2 des creux et le volume total V2 de ladite portion médiane de bande de roulement 20, compris entre la surface portante 24 et la surface de roulement 25, au plus égal à 45%. Sur la figure 6 est représentée une demi-portion médiane de bande de roulement de largeur D2=L2/2.

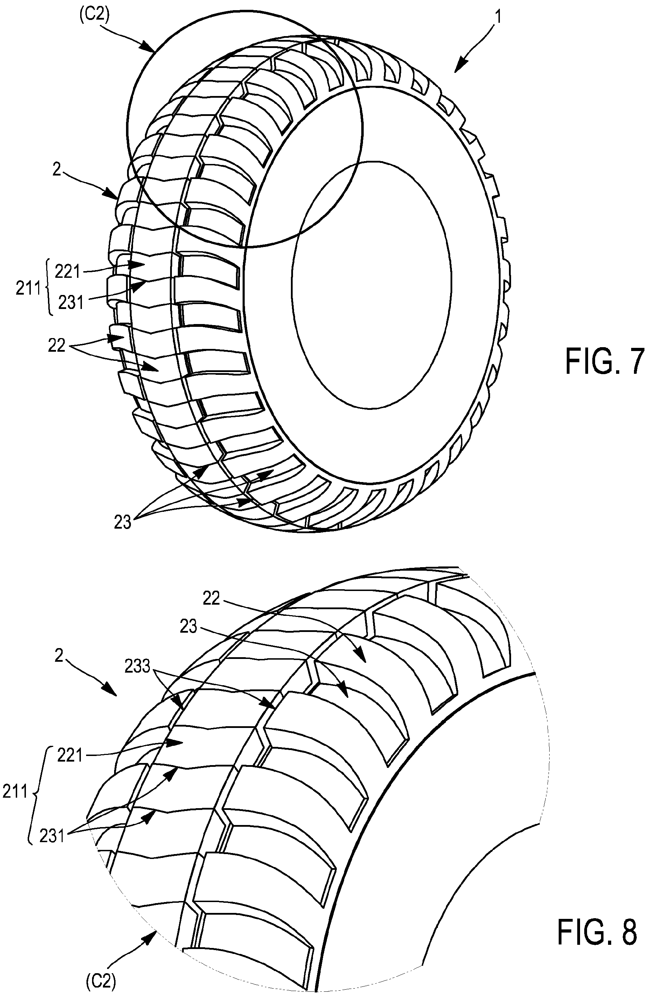

Les figures 7 et 8 illustrent un pneumatique 1 pour véhicule agricole selon une deuxième variante de réalisation de l'invention, respectivement en tant que figure d'ensemble et figure de détail C2. La bande de roulement 2 comprend des éléments de sculpture 22 séparés les uns des autres par des creux 23. Dans cette deuxième variante de réalisation, la bande de roulement 2 comprend une portion centrale 211, comprenant des éléments de sculpture 221 répartis circonférentiellement, séparés les uns des autres par des creux 231 de type incisions transversales, aptes à se fermer lors de leur passage dans l'aire de contact avec un sol au cours du roulage du pneumatique. En outre la portion centrale 211 de bande de roulement est axialement délimitée, de part et d'autre, par des creux circonférentiels 233.

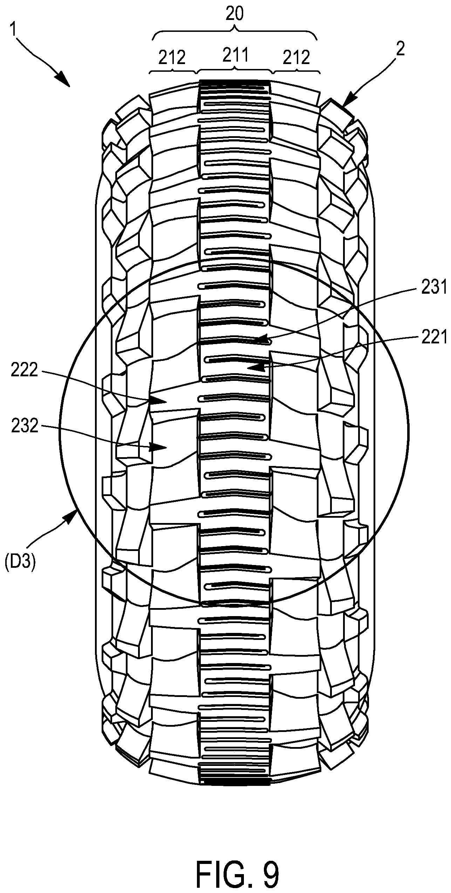

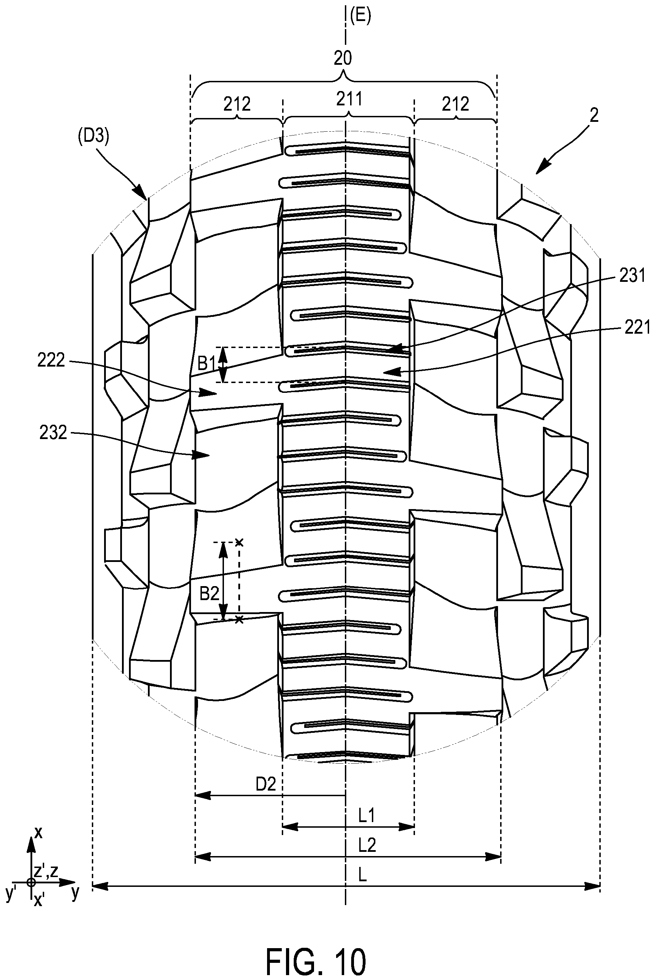

Les figures 9 et 10 illustrent un pneumatique pour véhicule agricole selon une troisième variante de réalisation de l'invention, respectivement en tant que figure d'ensemble et figure de détail D3. Dans cette troisième variante de réalisation, la bande de roulement 2 du pneumatique de largeur de section nominale L comprend une portion centrale 211, centrée sur un plan équatorial E du pneumatique et ayant une largeur axiale L1 au moins égale à 0.15*L et au plus égale à 0.35*L, et deux portions intermédiaires 212, chacune prolongeant axialement vers l'extérieur la portion centrale 211 jusqu'à une distance axiale D2 égale à 0.3*L, mesurée à partir du plan équatorial E. L'ensemble constitué par la portion centrale 211 et les deux portions intermédiaires 212 constitue une portion médiane 20, centrée sur le plan équatorial E du pneumatique et ayant une largeur axiale L2 égale à 2*D2=0.60*L. La portion centrale 211 comprend des éléments de sculpture 221 répartis circonférentiellement, deux à deux séparés par des creux transversaux 231 formant, avec une direction circonférentielle XX' du pneumatique, un angle au moins égal à 30°, et, dans le cas présent, au moins égal à 60°. Les creux transversaux 231 de la portion centrale 211 sont des incisions transversales, aptes à se fermer lors de leur passage dans l'aire de contact avec un sol au cours du roulage du pneumatique. Chaque élément de sculpture 221 a un élancement circonférentiel H1/B1 au plus égal à 1.5, H1 étant une hauteur radiale moyenne entre la surface portante et la surface de roulement au moins égale à 20 mm (non représentée sur les figures 8 et 9), et B1 étant une longueur circonférentielle moyenne. B1 est mesurée au niveau de la surface de roulement car les faces d'attaque et de fuite des éléments de sculpture 221 sont sensiblement radiales. Selon l'invention, la portion centrale 211 a un taux d'entaillement volumique local TEVL1, défini comme le rapport entre le volume VC1 des creux transversaux 231 et le volume total V1 de ladite portion centrale 211, compris entre la surface portante et la surface de roulement, au plus égal à 15%. Chaque portion intermédiaire 212 comprend des éléments de sculpture 222 répartis circonférentiellement, deux à deux séparés par des creux transversaux 232 formant, avec la direction circonférentielle XX' du pneumatique, un angle au moins égal à 30°, et, dans le cas présent, au moins égale à 60°. Chaque élément de sculpture 222 a un élancement circonférentiel H2/B2 au plus égal à 1.5, H2 étant une hauteur radiale moyenne entre la surface portante et la surface de roulement au moins égale à 20 mm (non représentée sur les figures 8 et 9), et B2 étant une longueur circonférentielle moyenne. B2 est mesurée entre deux points respectivement situés sensiblement au milieu de la face d'attaque et au milieu de la face de fuite, sachant que celles-ci présentent, par rapport à un plan radial YZ, une inclinaison appelée dépouille. Dans le mode de réalisation représenté sur les figures 9 et 10, l'élancement circonférentiel H1/B1 est strictement supérieur à l'élancement circonférentiel H2/B2 qui lui -même strictement inférieur à 0.6. Enfin la portion médiane 20, centrée sur le plan équatorial E du pneumatique et ayant une largeur axiale L2 égale à 2*D2=0.60*L, a un taux d'entaillement volumique local TEVL2, défini comme le rapport entre le volume VC2 des creux et le volume total V2 de ladite portion médiane 20, compris entre la surface portante et la surface de roulement, au plus égal à 45%.

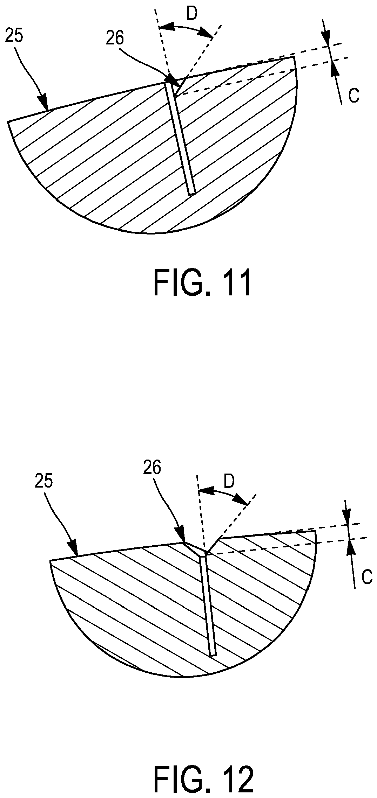

Les figures 11 et 12 représentent respectivement une vue en coupe d'un creux transversal comprenant un chanfrein unique et une vue en coupe d'un creux transversal comprenant deux chanfreins en vis-à-vis. Chaque chanfrein 26 débouche sur la surface de roulement 25 en formant, avec une direction radiale, un angle D au moins égal à 30° et au plus égal à 70° et ayant une hauteur radiale C au moins égale à 3 mm et au plus égale à 10 mm.

L'invention a été plus particulièrement étudiée pour un pneumatique pour véhicule agricole de dimension VF 600/70R30 165D, correspondant à un mode de réalisation de l'invention tel que représenté sur les figures 9 et 10 avec des éléments circonférentiels d'élément de sculpture différenciés entre la portion centrale et les portions intermédiaires.

Le tableau 1 ci-dessous présente les caractéristiques de l'exemple étudié par les inventeurs :

**[Tableau 1]**

| **Caractéristiques** | **Valeurs des caractéristiques** | **Commentaires** |
|---|---|---|
| Largeur de section nominale L | 600 mm | |
| Taux d'entaillement volumique global TEV | 48% | Au plus égal à 56% |
| Largeur L1 de portion centrale de bande de roulement | 160 mm | 27% de L, donc comprise entre 15% et 35% de L |
| Taux d'entaillement volumique local TEVL1 de portion centrale | 8% | Inférieur à 15% |
| Largeur L2 de portion médiane de bande de roulement | 360 mm | Egale à 60 % de L |
| Taux d'entaillement volumique local TEVL2 de portion médiane | 35% | Inférieur à 45% |
| Hauteur radiale moyenne H1 d'un élément de sculpture de portion centrale | 42 mm | Comprise entre 20 mm et 55 mm |
| Longueur circonférentielle moyenne B1 d'un élément de sculpture de portion centrale | 41 mm | |
| Elancement circonférentiel H1/B1 d'un élément de sculpture de portion centrale | 1.02 | Inférieur à 1.5 |
| Hauteur radiale moyenne H2 d'un élément de sculpture de portion intermédiaire | 37 mm | Comprise entre 20 mm et 55 mm |
| Longueur circonférentielle moyenne B2 d'un élément de sculpture de portion intermédiaire | 110 mm | |
| Elancement circonférentiel H2/B2 d'un élément de sculpture de portion intermédiaire | 0.34 | Inférieur à 0.6 |
| Largeur I d'une incision de portion centrale | 2.7 mm | Largeur permettant la fermeture de l'incision dans l'aire de contact, dans les conditions de roulage recommandées. |
| Angle d'une incision de portion centrale, par rapport à la direction circonférentielle | 85° | Supérieur à 60° et donc supérieur à 30° |
| Angle D d'un chanfrein d'une incision de portion centrale, par rapport à une direction radiale | 45° | Compris entre 30° et 70° |
| Hauteur radiale C d'un chanfrein d'une incision de portion centrale | 5 mm | Comprise entre 3 mm et 10 mm |
| Largeur moyenne d'un creux transversal (hors portion centrale) | 140 mm | |
| Angle moyen d'un creux transversal (hors portion centrale), par rapport à la direction circonférentielle | 80° | Supérieur à 30° |

Les inventeurs ont constaté qu'un pneumatique selon l'invention, ayant les caractéristiques décrites dans le tableau 1, confère, pour un faible glissement au sol compris entre 4% et 10%, un gain en traction de l'ordre de 27% par rapport à un pneumatique de l'état de la technique de référence, c'est-à-dire est capable de développer un effort de traction environ 27% supérieur à celui développé par un pneumatique de l'état de la technique.

## Revendications

1. Pneumatique (1) pour véhicule agricole ayant une largeur de section nominale L et comprenant, radialement de l'extérieur vers l'intérieur, une bande de roulement (2) et une armature de sommet (3):
- la bande de roulement (2) comprenant des éléments de sculpture (22), séparés les uns des autres par des creux (23) et s'étendant radialement vers l'extérieur à partir d'une surface portante (24) jusqu'à une surface de roulement (25),
- la bande de roulement (2) ayant un taux d'entaillement volumique global TEV, défini comme le rapport entre le volume VC de creux (23) et le volume total V de la bande de roulement (2) supposée sans creux, compris entre la surface portante (24) et la surface de roulement (25),
- la bande de roulement (2) comprenant une portion centrale (211), centrée sur un plan équatorial (E) du pneumatique et ayant une largeur axiale L1 au moins égale à 0.15 *L et au plus égale à 0.35*L, et deux portions intermédiaires (212), chacune prolongeant axialement vers l'extérieur la portion centrale (211) jusqu'à une distance axiale D2 égale à 0.3*L, mesurée à partir du plan équatorial (E),
- la portion centrale (211) et chaque portion intermédiaire (212) étant respectivement constituées par une répartition circonférentielle d'éléments de sculpture (221, 222), deux à deux séparés par des creux transversaux (231, 232) formant, avec une direction circonférentielle (XX') du pneumatique, un angle au moins égal à 30°,
- l'armature de sommet (3) comprenant au moins deux couches de sommet (31, 32), comprenant chacune des renforts enrobés dans un matériau élastomérique, parallèles entre eux, croisés d'une couche à la suivante, et formant, avec la direction circonférentielle (XX'), un angle au moins égal à 10°,
**caractérisé en ce que**
chaque élément de sculpture (22) a un élancement circonférentiel H/B au plus égal à 1.5, H étant une hauteur radiale moyenne entre la surface portante (24) et la surface de roulement (25) au moins égale à 20 mm, et B étant une longueur circonférentielle moyenne, et **en ce que**
la portion centrale (211) a un taux d'entaillement volumique local TEVL1, défini comme le rapport entre le volume VC1 des creux transversaux (231) et le volume total V1 de ladite portion centrale (211), compris entre la surface portante (24) et la surface de roulement (25), au plus égal à 15%.

2. Pneumatique (1) selon la revendication 1, **dans lequel** les creux transversaux (231) de la portion centrale (211) forment, avec la direction circonférentielle (XX'), un angle au moins égal à 60°.

3. Pneumatique (1) selon l'une des revendications 1 ou 2, **dans lequel** les creux transversaux (231) de la portion centrale (211) sont des incisions transversales, aptes à se fermer lors de leur passage dans l'aire de contact avec un sol au cours du roulage du pneumatique.

4. Pneumatique (1) selon l'une quelconque des revendications 1 à 3, **dans lequel** les creux transversaux (232) de chaque portion intermédiaire (212) forment, avec la direction circonférentielle (XX'), un angle au moins égal à 60°.

5. Pneumatique (1) selon l'une quelconque des revendications 1 à 4, chaque élément de sculpture (221) de la portion centrale (211) ayant une hauteur radiale moyenne H1, une longueur circonférentielle moyenne B1, et un élancement circonférentiel H1/B1, et chaque élément de sculpture (222) de chaque portion intermédiaire (212) ayant une hauteur radiale moyenne H2, une longueur circonférentielle moyenne B2, et un élancement circonférentiel H2/B2, **dans lequel** l'élancement circonférentiel H1/B1 est strictement supérieur à l'élancement circonférentiel H2/B2.

6. Pneumatique (1) selon la revendication 5, **dans lequel** l'élancement circonférentiel H2/B2 de chaque élément de sculpture (222) de chaque portion intermédiaire (212) est au plus égal à 0.6.

7. Pneumatique (1) selon l'une quelconque des revendications 1 à 6, **dans lequel** une portion médiane (20), centrée sur le plan équatorial (E) du pneumatique et ayant une largeur axiale L2 égale à 2*D2=0.60*L, a un taux d'entaillement volumique local TEVL2, défini comme le rapport entre le volume VC2 des creux (23) et le volume total V2 de ladite portion médiane (20), compris entre la surface portante (24) et la surface de roulement (25), au plus égal à 45%.

8. Pneumatique (1) selon l'une quelconque des revendications 1 à 7, **dans lequel** la bande de roulement (2) comprend exclusivement des creux transversaux (231, 232).

9. Pneumatique (1) selon l'une quelconque des revendications 1 à 7, **dans lequel** la portion centrale (211) est axialement délimitée, de part et d'autre, par des creux circonférentiels (233).

10. Pneumatique (1) selon l'une quelconque des revendications 1 à 9, **dans lequel** chaque élément de sculpture (22) a une hauteur radiale moyenne H au plus égale à 55 mm.

11. Pneumatique (1) selon l'une quelconque des revendications 1 à 10, **dans lequel** la bande de roulement (2) a un taux d'entaillement volumique global TEV au plus égal à 56%.

12. Pneumatique (1) selon l'une quelconque des revendications 1 à 11, **dans lequel** au moins une partie des éléments de sculpture (22) comprend au moins un chanfrein (26) débouchant sur la surface de roulement (25) en formant, avec une direction radiale (ZZ'), un angle D au moins égal à 30° et au plus égal à 70° et ayant une hauteur radiale C au moins égale à 3 mm et au plus égale à 10 mm.

13. Pneumatique (1) selon l'une quelconque des revendications 1 à 12, **dans lequel** l'armature de sommet (3) comprend des couches de sommet (31, 32) comprenant des renforts métalliques, de préférence au plus deux couches de sommet (31, 32) comprenant des renforts métalliques.

14. Pneumatique (1) selon l'une quelconque des revendications 1 à 13, **dans lequel** le pneumatique pour véhicule agricole est un pneumatique « IF » ou « Improved Flexion » (flexion améliorée) au sens de la norme « ETRTO » ou « European Tyre and Rim Technical Organisation » (Organisation Technique Européenne du Pneu et de la Jante), dans son « Standards Manual-2018 » (Manuel de normes 2018), dans la section consacrée aux « Agricultural equipment tyres » (Pneumatiques pour équipements agricoles).

15. Pneumatique (1) selon l'une quelconque des revendications 1 à 13, **dans lequel** le pneumatique pour véhicule agricole est un pneumatique « VF » ou « Very High Flexion » (très grande flexion) au sens de la norme « ETRTO » ou « European Tyre and Rim Technical Organisation » (Organisation Technique Européenne du Pneu et de la Jante), dans son « Standards Manual-2018 » (Manuel de normes 2018), dans la section consacrée aux « Agricultural equipment tyres » (Pneumatiques pour équipements agricoles).

## Patentansprüche

1. Reifen (1) für ein landwirtschaftliches Fahrzeug, welcher eine Nennquerschnittsbreite L aufweist und radial von außen nach innen einen Laufstreifen (2) und eine Scheitelbewehrung (3) umfasst:
- wobei der Laufstreifen (2) Profilelemente (22) umfasst, die durch Vertiefungen (23) voneinander getrennt sind und sich von einer tragenden Fläche (24) bis zu einer Lauffläche (25) radial nach außen erstrecken,
- wobei der Laufstreifen (2) einen globalen volumenbezogenen Negativprofilanteil TEV aufweist, der als das Verhältnis zwischen dem Volumen VC von Vertiefungen (23) und dem Gesamtvolumen V des als keine Vertiefungen aufweisend angenommenen Laufstreifens (2), das sich zwischen der tragenden Fläche (24) und der Lauffläche (25) befindet, definiert ist,
- wobei der Laufstreifen (2) einen mittleren Abschnitt (211), der auf eine Äquatorialebene (E) des Reifens zentriert ist und eine axiale Breite L1 von mindestens 0,15*L und höchstens 0,35*L aufweist, und zwei Zwischenabschnitte (212), die den mittleren Abschnitt (211) jeweils bis auf eine axiale Entfernung D2 von 0,3*L, gemessen ab der Äquatorialebene (E), axial nach außen verlängern, umfasst,
- wobei der mittlere Abschnitt (211) und jeder Zwischenabschnitt (212) jeweils aus einer Umfangsverteilung von Profilelementen (221, 222) bestehen, die jeweils paarweise durch quer verlaufende Vertiefungen (231, 232) voneinander getrennt sind, die mit einer Umfangsrichtung (XX') des Reifens einen Winkel von mindestens 30° bilden,
- wobei die Scheitelbewehrung (3) mindestens zwei Scheitellagen (31, 32) umfasst, die jeweils in ein Elastomermaterial eingebettete Festigkeitsträger umfassen, die zueinander parallel sind, sich von einer Lage zur folgenden kreuzen und mit der Umfangsrichtung (XX') einen Winkel von mindestens 10° bilden,
**dadurch gekennzeichnet, dass** jedes Profilelement (22) einen Schlankheitsgrad in Umfangsrichtung H/B von höchstens 1,5 aufweist, wobei H eine mittlere radiale Höhe zwischen der tragenden Fläche (24) und der Lauffläche (25) von mindestens 20 mm ist und B eine mittlere Länge in Umfangsrichtung ist, und dass der mittlere Abschnitt (211) einen lokalen volumenbezogenen Negativprofilanteil TEVL1, der als das Verhältnis zwischen dem Volumen VC1 der quer verlaufenden Vertiefungen (231) und dem Gesamtvolumen V1 des mittleren Abschnitts (211), das sich zwischen der tragenden Fläche (24) und der Lauffläche (25) befindet, definiert ist, von höchstens 15 % aufweist.

2. Reifen (1) nach Anspruch 1, wobei die quer verlaufenden Vertiefungen (231) des mittleren Abschnitts (211) mit der Umfangsrichtung (XX') einen Winkel von mindestens 60° bilden.

3. Reifen (1) nach einem der Ansprüche 1 oder 2, wobei die quer verlaufenden Vertiefungen (231) des mittleren Abschnitts (211) quer verlaufende Einschnitte sind, die dazu fähig sind, sich während des Rollens des Reifens bei ihrem Durchgang durch den Kontaktbereich mit einem Boden zu schließen.

4. Reifen (1) nach einem der Ansprüche 1 bis 3, wobei die quer verlaufenden Vertiefungen (232) jedes Zwischenabschnitts (212) mit der Umfangsrichtung (XX') einen Winkel von mindestens 60° bilden.

5. Reifen (1) nach einem der Ansprüche 1 bis 4, wobei jedes Profilelement (221) des mittleren Abschnitts (211) eine mittlere radiale Höhe H1, eine mittlere Länge in Umfangsrichtung B1 und einen Schlankheitsgrad in Umfangsrichtung H1/B1 aufweist und jedes Profilelement (222) jedes Zwischenabschnitts (212) eine mittlere radiale Höhe H2, eine mittlere Länge in Umfangsrichtung B2 und einen Schlankheitsgrad in Umfangsrichtung H2/B2 aufweist, wobei der Schlankheitsgrad in Umfangsrichtung H1/B1 streng größer als der Schlankheitsgrad in Umfangsrichtung H2/B2 ist.

6. Reifen (1) nach Anspruch 5, wobei der Schlankheitsgrad in Umfangsrichtung H2/B2 jedes Profilelements (222) jedes Zwischenabschnitts (212) höchstens 0,6 beträgt.

7. Reifen (1) nach einem der Ansprüche 1 bis 6, wobei ein Medianabschnitt (20), der auf die Äquatorialebene (E) des Reifens zentriert ist und eine axiale Breite L2 von 2*D2=0,60*L aufweist, einen lokalen volumenbezogenen Negativprofilanteil TEVL2, der als das Verhältnis zwischen dem Volumen VC2 der Vertiefungen (23) und dem Gesamtvolumen V2 des Medianabschnitts (20), das sich zwischen der tragenden Fläche (24) und der Lauffläche (25) befindet, definiert ist, von höchstens 45 % aufweist.

8. Reifen (1) nach einem der Ansprüche 1 bis 7, wobei der Laufstreifen (2) ausschließlich quer verlaufende Vertiefungen (231, 232) umfasst.

9. Reifen (1) nach einem der Ansprüche 1 bis 7, wobei der mittlere Abschnitt (211) auf beiden Seiten durch Vertiefungen in Umfangsrichtung (233) axial begrenzt ist.

10. Reifen (1) nach einem der Ansprüche 1 bis 9, wobei jedes Profilelement (22) eine mittlere radiale Höhe H von höchstens 55 mm aufweist.

11. Reifen (1) nach einem der Ansprüche 1 bis 10, wobei der Laufstreifen (2) einen globalen volumenbezogenen Negativprofilanteil TEV von höchstens 56 % aufweist.

12. Reifen (1) nach einem der Ansprüche 1 bis 11, wobei mindestens ein Teil der Profilelemente (22) mindestens eine Abschrägung (26) umfasst, die an der Lauffläche (25) mündet und dabei mit einer radialen Richtung (ZZ') einen Winkel D von mindestens 30° und höchstens 70° bildet und eine radiale Höhe C von mindestens 3 mm und höchstens 10 mm aufweist.

13. Reifen (1) nach einem der Ansprüche 1 bis 12, wobei die Scheitelbewehrung (3) Scheitellagen (31, 32), die Metallverstärkungen umfassen, vorzugsweise höchstens zwei Scheitellagen (31, 32), die Metallverstärkungen umfassen, umfasst.

14. Reifen (1) nach einem der Ansprüche 1 bis 13, wobei der Reifen für ein landwirtschaftliches Fahrzeug ein Reifen vom Typ "IF" oder "Improved Flexion" (verbesserte Einfederung) im Sinne der Norm "ETRTO" bzw. "European Tyre and Rim Technical Organisation" (Europäische Technische Reifen- und Felgen-Organisation) in ihrem "Standards Manual-2018" (Normenhandbuch 2018) in dem Teilabschnitt über "Agricultural equipment tyres" (Reifen für landwirtschaftliche Maschinen) ist.

15. Reifen (1) nach einem der Ansprüche 1 bis 13, wobei der Reifen für ein landwirtschaftliches Fahrzeug ein Reifen vom Typ "VF" oder "Very High Flexion" (sehr hohe Einfederung) im Sinne der Norm "ETRTO" bzw. "European Tyre and Rim Technical Organisation" (Europäische Technische Reifen- und Felgen-Organisation) in ihrem "Standards Manual-2018" (Normenhandbuch 2018) in dem Teilabschnitt über "Agricultural equipment tyres" (Reifen für landwirtschaftliche Maschinen) ist.

## Claims

1. Tyre (1) for an agricultural vehicle, having a nominal section width L and comprising, radially from the outside to the inside, a tread (2) and a crown reinforcement (3);
- the tread (2) comprising tread pattern elements (22), which are separated from one another by voids (23) and extend radially outwards from a bearing surface (24) to a tread surface (25),
- the tread (2) having an overall volumetric void ratio TEV, defined as being the ratio between the volume VC of voids (23) and the total volume V of the tread (2) assumed to be free of voids, comprised between the bearing surface (24) and the tread surface (25),
- the tread (2) comprising a central portion (211), centred on an equatorial plane (E) of the tyre and having an axial width L1 at least equal to 0.15*L and at most equal to 0.35*L, and two intermediate portions (212), each of which continues the central portion (211) axially outwards to an axial distance D2 equal to 0.3*L, measured from the equatorial plane (E),
- the central portion (211) and each intermediate portion (212) respectively being made up of a circumferential distribution of tread pattern elements (221, 222), which are separated in pairs by transverse voids (231, 232) forming an angle at least equal to 30° with a circumferential direction (XX') of the tyre,
- the crown reinforcement (3) comprising at least two crown layers (31, 32), each of which comprises mutually parallel reinforcers that are coated with an elastomeric material, are crossed from one layer to the next, and form an angle at least equal to 10° with the circumferential direction (XX'),
**characterized in that** each tread pattern element (22) has a circumferential slenderness H/B at most equal to 1.5, H being a mean radial height between the bearing surface (24) and the tread surface (25) at least equal to 20 mm, and B being a mean circumferential length, **and in that** the central portion (211) has a local volumetric void ratio TEVL1, defined as being the ratio between the volume VC1 of the transverse voids (231) and the total volume V1 of said central portion (211), comprised between the bearing surface (24) and the tread surface (25), at most equal to 15%.

2. Tyre (1) according to Claim 1, **wherein** the transverse voids (231) of the central portion (211) form an angle at least equal to 60° with the circumferential direction (XX').

3. Tyre (1) according to either of Claims 1 and 2, **wherein** the transverse voids (231) of the central portion (211) are transverse sipes that are able to close when they enter the contact patch in which contact is made with the ground when the tyre is running.

4. Tyre (1) according to any one of Claims 1 to 3, **wherein** the transverse voids (232) of each intermediate portion (212) form an angle at least equal to 60° with the circumferential direction (XX').

5. Tyre (1) according to any one of Claims 1 to 4, each tread pattern element (221) of the central portion (211) having a mean radial height H1, a mean circumferential length B1, and a circumferential slenderness H1/B1, and each tread pattern element (222) of each intermediate portion (212) having a mean radial height H2, a mean circumferential length B2, and a circumferential slenderness H2/B2, **wherein** the circumferential slenderness H1/B1 is strictly greater than the circumferential slenderness H2/B2.

6. Tyre (1) according to Claim 5, **wherein** the circumferential slenderness H2/B2 of each tread pattern element (222) of each intermediate portion (212) is at most equal to 0.6.

7. Tyre (1) according to any one of Claims 1 to 6, **wherein** a median portion (20) that is centred on the equatorial plane (E) of the tyre and has an axial width L2 equal to 2*D2=0.60*L has a local volumetric void ratio TEVL2, defined as being the ratio between the volume VC2 of the voids (23) and the total volume V2 of said median portion (20), comprised between the bearing surface (24) and the tread surface (25), at most equal to 45%.

8. Tyre (1) according to any one of Claims 1 to 7, **wherein** the tread (2) comprises exclusively transverse voids (231, 232).

9. Tyre (1) according to any one of Claims 1 to 7, **wherein** the central portion (211) is axially delimited on either side by circumferential voids (233).

10. Tyre (1) according to any one of Claims 1 to 9, **wherein** each tread pattern element (22) has a mean radial height H at most equal to 55 mm.

11. Tyre (1) according to any one of Claims 1 to 10, **wherein** the tread (2) has an overall volumetric void ratio TEV at most equal to 56%.

12. Tyre (1) according to any one of Claims 1 to 11, **wherein** at least some of the tread pattern elements (22) comprise at least one chamfer (26) which opens out on the tread surface (25) with the formation of an angle D at least equal to 30° and at most equal to 70° with a radial direction (ZZ') and has a radial height C at least equal to 3 mm and at most equal to 10 mm.

13. Tyre (1) according to any one of Claims 1 to 12, **wherein** the crown reinforcement (3) comprises crown layers (31, 32) comprising metal reinforcers, preferably at most two crown layers (31, 32) comprising metal reinforcers.

14. Tyre (1) according to any one of Claims 1 to 13, **wherein** the tyre for an agricultural vehicle is an "IF", or "Improved Flexion", tyre within the meaning of the standard of the "ETRTO", or "European Tyre and Rim Technical Organisation", in its "Standards Manual-2018", in the section devoted to "Agricultural equipment tyres".

15. Tyre (1) according to any one of Claims 1 to 13, **wherein** the tyre for an agricultural vehicle is a "VF", or "Very high Flexion", tyre within the meaning of the standard of the "ETRTO", or "European Tyre and Rim Technical Organisation", in its "Standards Manual-2018", in the section devoted to "Agricultural equipment tyres".
